# EUROPEAN PATENT SPECIFICATION

(11) **EP 3 537 178 B1**
(45) Date of publication and mention of the grant of the patent: **19.04.2023**
(21) Application number: 18212351.3
(22) Date of filing: 13.12.2018
(51) Int. Cl.: G01S 17/894, G01S 7/481, G01S 17/93, G01S 7/497

(54) **OPTICAL DISTANCE MEASURING SENSOR**
OPTISCHER DISTANZMESSSENSOR
CAPTEUR DE MESURE DE DISTANCES OPTIQUES

(30) Priority: 06.03.2018 JP 2018039803
(43) Date of publication of application: 11.09.2019
(73) Proprietor: OMRON Corporation, Shiokoji-dori, Shimogyo-Ku Kyoto-shi Kyoto 600-8530 (JP)
(72) Inventor: NING, Xiaoguang, Kyoto 600-8530 (JP); AKAGI, Tetsuya, Kyoto 600-8530 (JP)
(74) Representative: Emde, Eric

(56) References cited:
- EP-A1- 1 845 334
- US-A1- 2015 108 376
- OLLIKKALA A V H ET AL: "Range imaging using a time-of-flight 3D camera and a cooperative object", 2009 IEEE INTRUMENTATION AND MEASUREMENT TECHNOLOGY CONFERENCE (I2MTC) - 5-7 MAY 2009 - SINGAPORE, SINGAPORE, IEEE, PISCATAWAY, NJ, USA, 5 May 2009 (2009-05-05), pages 817-821, XP031492748, ISBN: 978-1-4244-3352-0

## Description

### BACKGROUND

### [Technical Field]

The disclosure relates to an optical distance measuring sensor.

### [Description of Related Art]

Patent Document 1 discloses a distance sensor including a light receiving device having a single-photon avalanche diode (SPAD) array divided into macro pixels, which is a distance sensor that monitors a danger area by using a protection area.

### Related Art

### Patent Documents

[Patent Document 1] Japanese Laid-open No. 2017-78707 (published on April 27, 2017)
The following document discloses an optical distance measuring sensor:
OLLIKKALA A V H ET AL: "Range imaging using a time-of-flight 3D camera and a cooperative abject", 2009 IEEE INTRUMENTATION AND MEASUREMENT TECHNOLOGY CONFERENCE (12MTC) - 5-7 MAY 2009, 5 May 2009 (2009-05-05), pages 817-821

### SUMMARY

The present invention is set forth in the independent claim 1. Preferred embodiments of the invention are described in the dependent claims.

### Problems to be Solved

However, the device disclosed in Patent Document 1 has a problem that, for example, in the case where an object is present in the detection area, a measurement error may occur in the measurement of the distance to the object due to the influence of the distance to the background.

An objective of an embodiment of the disclosure is to accurately measure a distance to an object.

### Means for Solving the Problems

In order to solve the above problem, the optical distance measuring sensor according to an embodiment of the disclosure is an optical distance measuring sensor that measures a distance to an object arranged in an area within a predetermined maximum measurement distance by projecting light to the object and receiving reflected light thereof. The optical distance measuring sensor includes a light receiving part including a plurality of light receiving elements and receiving the reflected light via an optical system. A minimum value of a size of the object, which is measurable within the maximum measurement distance, as viewed from the light receiving part is determined. The optical system is configured such that, in the case where the object having the size of the minimum value is arranged in the area within the maximum measurement distance, two or more of the light receiving elements receive the reflected light from the object.

According to the above configuration, the light receiving part that receives the reflected light from the object is a multi-pixel light receiving part having a plurality of light receiving elements. Therefore, for example, in the case where the optical distance measuring sensor calculates the distance to a detection object for each light reception signal of the plurality of light receiving elements, a shortest distance among the distances to the detection object can be determined as the distance to the object. Therefore, compared with the case where the light receiving part is not of a multi-pixel type and the distance to the object is measured over the entire observation area, it is possible to accurately measure the distance to the object.

Also, the optical system is configured such that two or more light receiving elements of the light receiving elements of the light receiving part receive the reflected light from the object. Therefore, it is possible to accurately measure the distance to the object without causing a measurement error due to the influence of the distance to the background, which occurs in the case of receiving the reflected light with only one light receiving element.

In the optical distance measuring sensor according to an embodiment of the disclosure, the optical system preferably includes a zoom lens capable of changing a focal length.

According to the above configuration, since the optical system includes the zoom lens, at least one of the maximum measurement distance and the minimum value of the size of the object can be changed by changing the focal length. Therefore, it is possible to deal with various measurement environments and measurement objects.

In the optical distance measuring sensor according to an embodiment of the disclosure, the optical system preferably includes a replacement mechanism configured to be capable of replacing at least one lens of the optical system.

According to the above configuration, the optical system includes a replacement mechanism configured to be capable of replacing at least one lens of the optical system. Therefore, by replacing the lens, at least one of the maximum measurement distance and the minimum value of the size of the object can be changed. Therefore, it is possible to deal with various measurement environments and measurement objects.

It is preferable to further provide a processing part that performs a process of calculating a distance to a detection object for each light reception signal of the plurality of light receiving elements and determining that a shortest distance among the distances to the detection object is the distance to the object.

According to the above configuration, compared with the case where the light receiving part is not of a multi-pixel type and the distance to the object is measured over the entire observation area, it is possible to accurately measure the distance to the object. In addition, in the case where the optical distance measuring sensor is adopted as the sensor for avoiding collision between a device provided with the optical distance measuring sensor and the object, it is possible to accurately measure the distance to the object. Therefore, collision between the device provided with the optical distance measuring sensor and the object can be reliably avoided.

### Effects

According to an embodiment of the disclosure, it is possible to accurately measure the distance to the object.

### BRIEF DESCRIPTION OF THE DRAWINGS

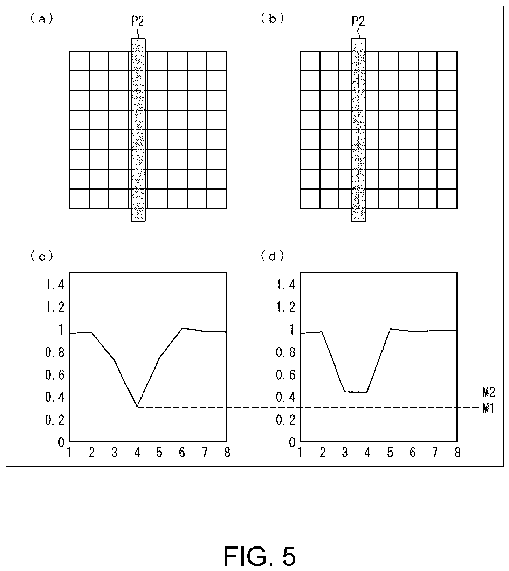

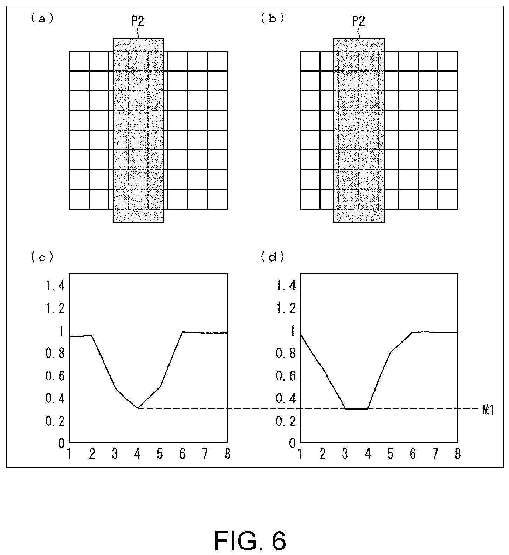

FIG. 1 is a schematic diagram showing an example of the configuration of an optical distance measuring sensor according to the embodiment of the disclosure.
(a) of FIG. 2 is a schematic diagram showing an example of the configuration of a light receiving part, and (b) of FIG. 2 is a diagram showing an example of an image recognized by the light receiving part.
FIG. 3 is a block diagram showing an example of the configuration of the optical distance measuring sensor according to the embodiment of the disclosure.
FIG. 4 is a flowchart showing an example of the operation of the optical distance measuring sensor according to the embodiment of the disclosure.
(a) of Fig. 5 is a diagram showing an example of the case where an object is arranged at the center of pixels arranged in any one column among a plurality of pixels when the object includes one pixel among the plurality of pixels in the image recognized by an image recognition part. (b) of Fig. 5 is a diagram showing an example of the case where the object is arranged at the boundary between any two columns of pixels among a plurality of pixels when the object includes one pixel among the plurality of pixels in the image recognized by the image recognition part. (c) of Fig. 5 is a view showing a measured distance of each pixel in the case of (a) of Fig. 5, and (d) of Fig. 5 is a view showing a measured distance of each pixel in the case of (b) of Fig. 5.
(a) of Fig. 6 is a diagram showing an example of the case where an object is arranged at the center of pixels arranged in any one column among a plurality of pixels when the object includes two or more pixels among the plurality of pixels in the image recognized by the image recognition part. (b) of Fig. 6 is a diagram showing an example of the case where the object is arranged at the boundary between any two columns of pixels among a plurality of pixels when the object includes two or more pixels among the plurality of pixels in the image recognized by the image recognition part. (c) of Fig. 6 is a view showing a measured distance of each pixel in the case of (a) of Fig. 6, and (d) of Fig. 6 is a view showing a measured distance of each pixel in the case of (b) of Fig. 6.

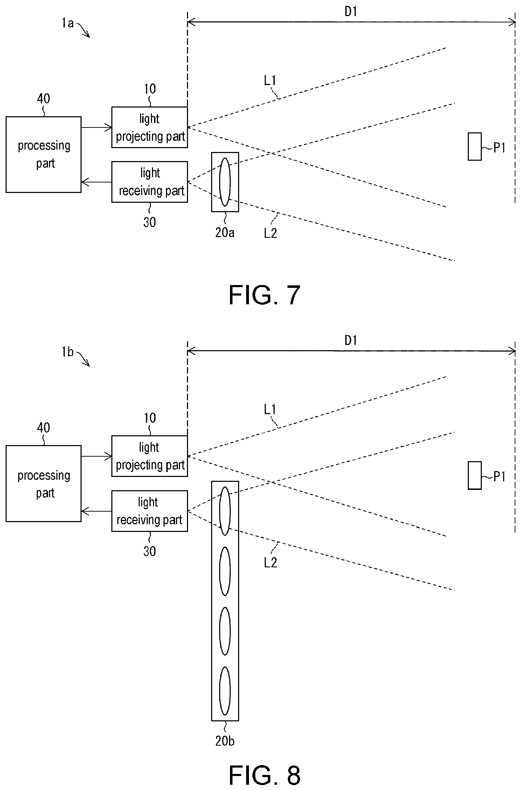

FIG. 7 is a schematic diagram showing an example of the configuration of an optical distance measuring sensor according to Modified Example 1 of the disclosure.
FIG. 8 is a schematic diagram showing an example of the configuration of an optical distance measuring sensor according to Modified Example 2 of the disclosure.

### DESCRIPTION OF THE EMBODIMENTS

### [Embodiments]

Hereinafter, an embodiment (hereinafter also referred to as "the present embodiment") according to an aspect of the disclosure will be described with reference to the drawings.

### 1. Application Example

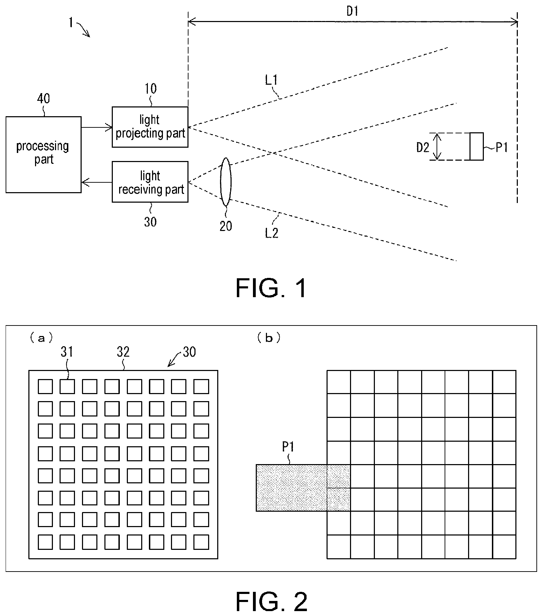

First, referring to FIG. 1, an example of the scene to which the disclosure is applied will be described. FIG. 1 is a schematic view schematically showing an example of the application scene of an optical distance measuring sensor 1 according to the present embodiment and showing an example of the configuration of the optical distance measuring sensor 1 according to the embodiment of the disclosure.

As shown in FIG. 1, the optical distance measuring sensor 1 measures a distance to an object P1 arranged in an area within a predetermined maximum measurement distance D1 by projecting light to the object P1 and receiving the reflected light thereof. The optical distance measuring sensor 1 includes a light projecting part 10, an optical system 20, a light receiving part 30, and a processing part 40. A small TOF (Time of Flight) distance measuring sensor that can operate even in a dark place and is used for a small camera, etc. may be adopted as the optical distance measuring sensor 1. Further, by adopting a small TOF distance measuring sensor as the optical distance measuring sensor 1, the cost for adopting the optical distance measuring sensor 1 can be reduced.

### 2. Configuration Example

The light projecting part 10 is, for example, a light projector that projects an incident light L1 to the object P1. The light projecting part 10 includes a light source (not shown) that emits light, a light projection optical fiber (not shown) that receives the light from the light source and guides the light to outside of the optical distance measuring sensor 1, and a light projection circuit (not shown) provided on a substrate (not shown). The light source may be, for example, an LED (light emitting diode). The light projection circuit may include an amplifier circuit.

The optical system 20 may include, for example, a lens made of translucent glass or resin. The optical system 20 is arranged in the vicinity of the light receiving part 30, and a convex lens may be adopted as the lens included in the optical system 20. A reflected light L2 from a detection object such as the object P1 passes through the optical system 20.

(a) of Fig. 2 is a schematic diagram showing an example of the configuration of the light receiving part 30, and (b) of Fig. 2 is a diagram showing an example of an image recognized by the light receiving part 30. As shown in (a) of Fig. 2, the light receiving part 30 is a multi-pixel light receiving part having a plurality of light receiving elements 31 and receives the reflected light from the object P1 via the optical system 20. The light receiving part 30 includes a light reception optical fiber (not shown) that receives the reflected light L2 and guides the reflected light L2 to the plurality of light receiving elements 31, and a light reception circuit (not shown) provided on a substrate 32. For example, the light receiving part 30 may have a structure in which the plurality of light receiving elements 31 are arranged in a matrix of m × n (m and n are natural numbers) on the substrate 32. In (a) of Fig. 2, the plurality of light receiving elements 31 are arranged in a matrix of, for example, 8 × 8.

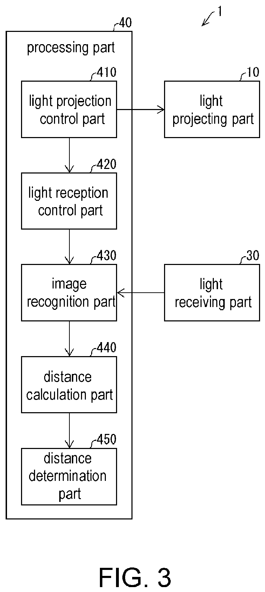

As shown in FIG. 3, the processing part 40 includes a light projection control part 410, a light reception control part 420, an image recognition part 430, a distance calculation part 440, and a distance determination part 450. The processing part 40 calculates the distance to the detection object for each light reception signal of the plurality of light receiving elements 31. In addition, in the case where the optical distance measuring sensor 1 is adopted as a sensor for avoiding collision between a device provided with the optical distance measuring sensor 1 and the object P1, the processing part 40 may, for example, perform a process for determining that the shortest distance among the distances to the detection object is the distance to the object P1. The details will be described below.

### 3. Operation Example

### (Operation of the optical distance measuring sensor 1)

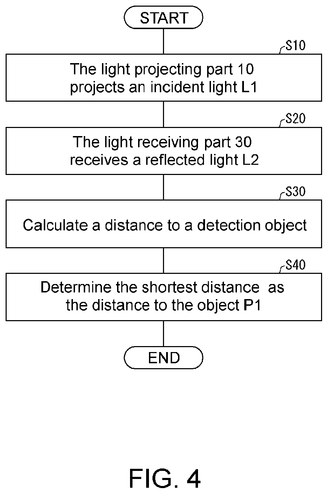

Next, the operation of the optical distance measuring sensor 1 will be described with reference to FIG. 3 and FIG. 4. FIG. 3 is a block diagram showing an example of the configuration of the optical distance measuring sensor 1 according to the embodiment of the disclosure. In FIG. 3, details of the processing part 40 are shown, and the optical system 20 is omitted. FIG. 4 is a flowchart showing an example of the operation of the optical distance measuring sensor 1 according to the embodiment of the disclosure.

First, the light projection control part 410 controls the light projecting part 10 to project the incident light L1 and instructs the light reception control part 420 to perform a process. As a result, the light projecting part 10 starts projecting the incident light L1 (step S10). Upon being instructed by the light projection control part 410 to perform a process, the light reception control part 420 instructs the image recognition part 430 to receive light reception signals from the plurality of light receiving elements 31 of the light receiving part 30.

Upon being instructed by the light reception control part 420, the image recognition part 430 starts receiving light reception signals from the plurality of light receiving elements 31 of the light receiving part 30. After the light projecting part 10 starts projecting the incident light L1, the light receiving part 30 receives the reflected light L2 (step S20), and the image recognition part 430 receives the light reception signals from the plurality of light receiving elements 31 of the light receiving part 30.

Here, in FIG. 2A, the plurality of light receiving elements 31 are arranged in a matrix of 8 × 8. For this reason, the image recognized by the image recognition part 430 receiving the light reception signals from the plurality of light receiving elements 31 of the light receiving part 30 is an image in which the pixels are arranged in a matrix of 8 × 8, as shown in (b) of Fig. 2. That is, the image recognition part 430 recognizes the light reception signals from the plurality of light receiving elements 31 of the light receiving part 30 as a plurality of pixels. At this time, the light reception signals of the plurality of light receiving elements 31 correspond with the plurality of pixels in a one-to-one manner. The image recognition part 430 transmits the data of the recognized image to the distance calculation part 440.

Upon receiving the image data from the image recognition part 430, the distance calculation part 440 calculates the distance between the light receiving part 30 and the detection object for all the pixels of the image recognized by the image recognition part 430 (step S30). In particular, the distance calculation part 440 calculates the distance for each pixel based on the received light amount of the light reception signal and the time difference between the time when the light projecting part 10 starts emitting the incident light L1 and the time when the image recognition part 430 receives the light reception signal. The distance calculation part 440 transmits the data of the calculated distances to the distance determination part 450.

Upon receiving the distance data from the distance calculation part 440, the distance determination part 450 determines that the shortest distance among the distances to the detection object calculated by the distance calculation part 440 is the distance to the object P1 (step S40). At this time, the object P1 is the detection object closest to the light receiving part 30. The result determined by the distance determination part 450 may be transmitted to the device provided with the optical distance measuring sensor 1.

As described above, in the case where the optical distance measuring sensor 1 is adopted as a sensor for avoiding collision between the device provided with the optical distance measuring sensor 1 and the object P1, it is possible to accurately measure the distance to the object P1. Therefore, collision between the device provided with the optical distance measuring sensor 1 and the object P1 can be reliably avoided.

In addition, as shown in FIG. 1, the minimum value of a size D2 of the object P1, which is measurable within the maximum measurement distance D1, as viewed from the light receiving part 30 is determined. The size D2 is the length in any direction of the object P1 as viewed from the light receiving part 30. Here, the case where a minimum value Dmin of the size D2 of the object P1 is determined is taken into consideration. In this case, when the object P1 having the size of the minimum value Dmin is arranged in the area within the maximum measurement distance D1, the optical system 20 is configured such that two or more light receiving elements 31 receive the reflected light from the object P1.

That is, at this time, for example, the magnification ratio or reduction ratio of the convex lens of the optical system 20 and the position of the optical system 20 are determined such that the two or more light receiving elements 31 receive the reflected light from the object P1 having the size of the minimum value Dmin. In the case where the two or more light receiving elements 31 receive the reflected light from the object P1 having the size of the minimum value Dmin, as shown in (b) of Fig. 2, in the image recognized by the image recognition part 430, the object P1 includes two or more pixels.

As described above, the light receiving part 30, which receives the reflected light L2 from the object P1, is a multi-pixel light receiving part having the plurality of light receiving elements 31. Therefore, for example, in the case where the processing part 40 calculates the distance to the detection object for each light reception signal of the plurality of light receiving elements 31, it is possible to determine that the shortest distance among the distances to the detection object is the distance to the object P1. Thus, compared with the case where the light receiving part 30 is not of a multi-pixel type and the distance to the object P1 is measured over the entire observation area, the distance to the object P1 can be accurately measured.

In addition, the optical system 20 is configured such that two or more light receiving elements 31 among the plurality of light receiving elements 31 of the light receiving part 30 receive the reflected light from the object P1. Therefore, it is possible to accurately measure the distance to the object P1 without a measurement error due to the influence of the distance to the background, which occurs in the case of receiving the reflected light from the object with only one light receiving element.

(a) of Fig. 5 is a diagram showing an example of the case where an object P2 is arranged at the center of pixels arranged in any one column among a plurality of pixels when the object P2 includes one pixel among the plurality of pixels in the image recognized by the image recognition part 430. (b) of Fig. 5 is a diagram showing an example of the case where the object P2 is arranged at the boundary between any two columns of pixels among a plurality of pixels when the object P2 includes one pixel among the plurality of pixels in the image recognized by the image recognition part 430. In (a) of Fig. 5 and (b) of Fig. 5, "the object P2 including one pixel among the plurality of pixels" means that the width in the lateral direction of the object P2 is the same as or substantially the same as the width of one pixel.

(c) of Fig. 5 is a view showing a measured distance of each pixel in the case of (a) of Fig. 5, and (d) of Fig. 5 is a view showing a measured distance of each pixel in the case of (b) of Fig. 5. In (c) of Fig. 5 and (d) of Fig. 5, the horizontal axis corresponds to the column among the plurality of light receiving elements 31, and the vertical axis corresponds to the measured distance. For example, in the horizontal axis, if it is 1, it corresponds to the first column among the plurality of light receiving elements 31, and if it is 2, it corresponds to the second column among the plurality of light receiving elements 31. This also applies to (c) of Fig. 6 and (d) of Fig. 6 to be described later.

In (c) of Fig. 5, in the image recognized by the image recognition part 430, in the case where the object P2 includes one pixel among the plurality of pixels, a measured distance M1 between the light receiving part 30 and the object P2 matches the actual distance between the light receiving part 30 and the object P2. However, in (d) of Fig. 5, in the image recognized by the image recognition part 430, in the case where the object P2 includes one pixel among the plurality of pixels, a measured distance M2 between the light receiving part 30 and the object P2 does not match the actual distance between the light receiving part 30 and the object P2. The reasons are as described below. In the case where the object P2 includes one pixel among the plurality of pixels, depending on the position of the object P2, the image recognition part 430 may not be able to accurately recognize the object P2. For example, as shown in (b) of Fig. 5, there is a case where the object P2 is arranged at the boundary between any two columns of pixels among the plurality of pixels. In this case, since the object P2 is arranged at the boundary between the two columns, the pixels adjacent to the boundary between the two columns include a part of the object P2. Therefore, a portion (background) other than the object P2 appears in these pixels. As a result, since the measured distance M2 calculated with these pixels is a weighted average value of the distance based on the reflected light from the object P2 and the distance based on the reflected light from the background, the measured distance M2 does not match the actual distance between the light receiving part 30 and the object P2.

(a) of Fig. 6 is a diagram showing an example of the case where an object P2 is arranged at the center of pixels arranged in any one column among a plurality of pixels when the object P2 includes two or more pixels among the plurality of pixels in the image recognized by the image recognition part 430. (b) of Fig. 6 is a diagram showing an example of the case where the object P2 is arranged at the boundary between any two columns of pixels among a plurality of pixels when the object P2 includes two or more pixels among the plurality of pixels in the image recognized by the image recognition part 430. In (a) of Fig. 6 and (b) of Fig. 6, "the object P2 including two or more pixels among the plurality of pixels" means that the width in the lateral direction of the object P2 is larger than the width of two pixels.

(c) of Fig. 6 is a view showing a measured distance of each pixel in the case of (a) of Fig. 6, and (d) of Fig. 6 is a view showing a measured distance of each pixel in the case of (b) of Fig. 6.

In (c) of Fig. 6 and (d) of Fig. 6, in the image recognized by the image recognition part 430, in the case where the object P2 includes two or more pixels among the plurality of pixels, a measured distance M1 between the light receiving part 30 and the object P2 matches the actual distance between the light receiving part 30 and the object P2.

As described above, even in the case where the object P2 is arranged at the boundary between any two columns of pixels among the plurality of pixels, two or more light receiving elements 31 among the plurality of light receiving elements 31 receive the reflected light from the object P2 such that the distance between the light receiving part 30 and the object P2 can be accurately measured.

### 4. Modified Examples

### (Modified Example 1)

FIG. 7 is a schematic diagram showing the configuration of an optical distance measuring sensor 1a according to Modified Example 1 of the disclosure. As shown in FIG. 7, the optical distance measuring sensor 1a is different from the optical distance measuring sensor 1 in that the optical system 20 is changed to an optical system 20a. The optical system 20a may include, for example, a zoom lens capable of changing the focal length.

In this way, since the optical system 20a includes a zoom lens, it is possible to change at least one of the maximum measurement distance D1 and the minimum value Dmin of the size D2 of the object P1 by changing the focal length. Therefore, it is possible to deal with various measurement environments and measurement objects.

The zoom lens may be configured such that the focal length can be manually changed by a user or may be configured such that the focal length can be mechanically changed by a driving part included in the optical system 20a.

### (Modified Example 2)

FIG. 8 is a schematic diagram showing the configuration of an optical distance measuring sensor 1b according to Modified Example 2 of the disclosure. As shown in FIG. 8, the optical distance measuring sensor 1b is different from the optical distance measuring sensor 1 in that the optical system 20 is changed to an optical system 20b. The optical system 20b may include, for example, a replacement mechanism configured to be capable of replacing at least one lens of the optical system 20b.

In this way, the optical system 20b includes a replacement mechanism configured to be capable of replacing at least one lens of the optical system 20b. Therefore, by replacing the lens, at least one of the maximum measurement distance D1 and the minimum value Dmin of the size D2 of the object P1 can be changed. Thus, it is possible to deal with various measurement environments and measurement objects.

The replacement mechanism may be configured such that at least one lens can be manually replaced by a user or may be configured such that at least one lens can be mechanically replaced by a driving part included in the optical system 20b.

### [Implementation Example by Software]

The control block (particularly the processing part 40) of the optical distance measuring sensor 1 may be realized by a logic circuit (hardware) formed in an integrated circuit (IC chip), etc. or may be realized by software.

In the latter case, the optical distance measuring sensor 1 includes a computer that executes commands of a program, which is software for realizing each function. The computer includes, for example, one or more processors and includes a computer readable recording medium storing the program. In the computer, the processor reads the program from the recording medium and executes the program, so as to achieve the disclosure. For example, a CPU (Central Processing Unit) may be used as the processor. In addition to a "non-transitory tangible medium" such as a ROM (Read Only Memory), a tape, a disk, a card, a semiconductor memory, a programmable logic circuit, etc. may be used as the recording medium. Further, a RAM (Random Access Memory), etc. may be further included for developing the above program. In addition, the above program may be provided to the computer via any transmission medium (e.g., a communication network, a broadcast wave, etc.) capable of transmitting the program. An embodiment of the disclosure can also be realized in the form of a data signal embedded in a carrier wave, in which the program is embodied by electronic transmission.

### Description of Reference Numerals

- 1, 1a, and 1b: optical distance measuring sensor
- 10: light projecting part
- 20, 20a, and 20b: optical system
- 30: light receiving part
- 31: light receiving element
- 32: substrate
- 40: processing part
- 410: light projection control part
- 420: light reception control part
- 430: image recognition part
- 440: distance calculation part
- 450: distance determination part
- D1: maximum measurement distance
- Dmin: minimum value
- L1: incident light
- L2: reflected light
- M1 and M2: measured distance
- P1 and P2: object

## Claims

1. An optical distance measuring sensor (1, 1a, 1b) that measures a distance to an object (P1, P2) arranged in an area within a predetermined maximum measurement distance by projecting light to the object (P1, P2) and receiving reflected light thereof, the optical distance measuring sensor (1, 1a, 1b) comprising:
a light receiving part (30) comprising a plurality of light receiving elements (31) and receiving the reflected light via an optical system (20, 20a, 20b), **characterized in that**
the optical distance measuring sensor (1, 1a, 1b) recognizes light reception signals from the plurality of light receiving elements (31) of the light receiving part (30) as a plurality of pixels, the optical system (20, 20a, 20b) is configured such that, in the case where the object (P1, P2) having the size of a minimum value of a size of the object (P1, P2), which is measurable within the maximum measurement distance, as viewed from the light receiving part (30) is arranged in the area within the maximum measurement distance and the minimum value is larger than or equal to twice of a width of each of the pixels, two or more of the light receiving elements (31) receive the reflected light from the object (P1, P2).

2. The optical distance measuring sensor (1, 1a, 1b) according to claim 1, wherein the optical system (20, 20a, 20b) comprises a zoom lens capable of changing a focal length.

3. The optical distance measuring sensor (1, 1a, 1b) according to claim 1, wherein the optical system (20, 20a, 20b) comprises a replacement mechanism configured to be capable of replacing at least one lens of the optical system (20, 20a, 20b).

4. The optical distance measuring sensor (1, 1a, 1b) according to any one of claims 1 to 3, further comprising a processing part (40) that performs a process of calculating a distance to a detection object (P1, P2) for each light reception signal of the plurality of light receiving elements (31) and determining that a shortest distance among the distances to the detection object (P1, P2) is the distance to the object (P1, P2).

## Patentansprüche

1. Optischer Distanz-Messsensor (1, 1a, 1b), der eine Distanz zu einem Objekt (P1, P2) misst, angeordnet in einem Bereich innerhalb einer vorbestimmten maximalen Messdistanz durch Projizieren von Licht auf das Objekt (P1, P2) und Empfangen von reflektierten Licht davon,
wobei der optische Distanz Messensor (1, 1a, 1b) umfasst:
ein Lichtempfangsteil (30), umfassend eine Vielzahl von Lichtempfangselementen (31) und Empfangen des reflektierten Lichts über ein optisches System (20, 20a, 20b) **dadurch gekennzeichnet, dass**
der optische Distanz Messsensor (1, 1a, 1b) Lichtempfangssignale von der Vielzahl von Lichtempfangselementen (31) des Lichtempfangsteils (30) als eine Vielzahl von Pixeln erkennt, wobei das optische System (20, 20a, 20b) so konfiguriert ist, dass in dem Fall, dass das Objekt (P1, P2) die Größe eines Minimumwerts einer Größe des Objekts (P1, P2) aufweist, die messbar innerhalb der maximalen Messdistanz ist, wie gesehen von dem Lichtempfangsteil (30), in dem Bereich innerhalb der maximalen Messdistanz angeordnet ist, und der Minimumwert größer ist als oder gleich zweimal einer Breite von jedem der Pixel, wobei zwei oder mehr der Lichtempfangselemente (31) das reflektierte Licht von dem Objekt (P1, P2) empfangen.

2. Optischer Distanz-Messsensor (1, 1a, 1b) gemäß Anspruch 1, wobei das optische System (20, 20a, 20b) eine Zoomlinse umfasst, das geeignet ist eine Brennweite zu ändern.

3. Optischer Distanz-Messsensor (1, 1a, 1b) gemäß Anspruch 1, wobei das optische System (20, 20a, 20b) einen Austauschmechanismus umfasst, der konfiguriert ist, um geeignet zu sein, wenigstens eine Linse des optischen Systems (20, 20a, 20b) zu ersetzen.

4. Optischer Distanz-Messsensor (1, 1a, 1b) gemäß irgendeinem der Ansprüche 1 bis 3, ferner umfassend ein Verarbeitungsteil (40), das einen Berechnungsvorgang einer Distanz zu einem Erfassungsobjekt (P1, P2) für jedes Lichtempfangssignal von der Vielzahl von Lichtempfangselementen (31) und Bestimmen durchführt, dass eine kürzeste Distanz unter den Distanzen zu dem Erfassungsobjekt (P1, P2) die Distanz zu dem Objekt (P1, P2) ist.

## Revendications

1. Capteur de mesure de distance optique (1, 1a, 1b) qui mesure une distance jusqu'à un objet (P1, P2) agencé dans une zone à l'intérieur d'une distance de mesure maximale prédéterminée par la projection d'une lumière sur l'objet (P1, P2) et la réception d'une lumière réfléchie depuis celui-ci, le capteur de mesure de distance optique (1, 1a, 1b) comprenant :
une partie de réception de lumière (30) comprenant une pluralité d'éléments de réception de lumière (31) et recevant la lumière réfléchie via un système optique (20, 20a, 20b),
**caractérisé en ce que**
le capteur de mesure de distance optique (1, 1a, 1b) reconnaît des signaux de réception de lumière provenant de la pluralité d'éléments de réception de lumière (31) de la partie de réception de lumière (30) en tant qu'une pluralité de pixels, le système optique (20, 20a, 20b) est configuré de sorte que, dans le cas où l'objet (P1, P2) ayant la taille d'une valeur minimale d'une taille de l'objet (P1, P2), qui est mesurable à l'intérieur de la distance de mesure maximale, en vue depuis la partie de réception de lumière (30), est agencé dans la zone à l'intérieur de la distance de mesure maximale et la valeur minimale est supérieure ou égale à deux fois une largeur de chacun des pixels, deux ou plus des éléments de réception de lumière (31) reçoivent la lumière réfléchie depuis l'objet (P1, P2).

2. Capteur de mesure de distance optique (1, 1a, 1b) selon la revendication 1, dans lequel le système optique (20, 20a, 20b) comprend un objectif zoom capable de changer une longueur focale.

3. Capteur de mesure de distance optique (1, 1a, 1b) selon la revendication 1, dans lequel le système optique (20, 20a, 20b) comprend un mécanisme de remplacement configuré pour être capable de remplacer au moins un objectif du système optique (20, 20a, 20b).

4. Capteur de mesure de distance optique (1, 1a, 1b) selon l'une quelconque des revendications 1 à 3, comprenant en outre une partie de traitement (40) qui réalise un processus de calcul d'une distance jusqu'à un objet de détection (P1, P2) pour chaque signal de réception de lumière de la pluralité d'éléments de réception de lumière (31) et de détermination qu'une distance la plus courte parmi les distances jusqu'à l'objet de détection (P1, P2) est la distance jusqu'à l'objet (P1, P2) .
